(19) Europäisches Patentamt / European Patent Office / Office européen des brevets

(11) **EP 2 751 421 B1**

(12) **EUROPEAN PATENT SPECIFICATION**

(45) Date of publication and mention
of the grant of the patent:
**05.04.2017  Bulletin 2017/14**

(21) Application number: **12756242.9**

(22) Date of filing: **31.08.2012**

(51) Int Cl.:
*F03D 3/06* *(2006.01)*          *F03B 13/26* *(2006.01)*
*F03B 1/00* *(2006.01)*          *F03B 3/12* *(2006.01)*
*F03B 17/06* *(2006.01)*         *F03D 3/02* *(2006.01)*
*F03D 9/00* *(2016.01)*

(86) International application number:
**PCT/GB2012/052134**

(87) International publication number:
**WO 2013/030582 (07.03.2013 Gazette 2013/10)**

(54) **vertical axis turbine**

Turbine mit vertikaler Achse

turbine à axe vertical

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.09.2011  GB 201115186
03.05.2012  GB 201207747**

(43) Date of publication of application:
**09.07.2014  Bulletin 2014/28**

(73) Proprietor: **Mitchell, John Stephen
North Road
Sherbourne
Dorset DT9 3JW (GB)**

(72) Inventor: **Mitchell, John Stephen
North Road
Sherbourne
Dorset DT9 3JW (GB)**

(74) Representative: **Smee, Anthony James Michael et
al
AMS IP Limited
119 Valley Road
Rickmansworth, Herts. WD3 4BN (GB)**

(56) References cited:
WO-A2-2010/042069          AU-A4- 2011 100 453
KR-B1- 101 003 296          US-A1- 2006 151 664
US-A1- 2008 231 057         US-A1- 2009 322 091
US-A1- 2010 084 862         US-A1- 2010 135 804

**Description**

The present invention relates to a turbine for extracting energy from a fluid flow. In particular, the invention relates to a vertical axis turbine whose blades may be adjusted for efficient energy extraction.

Vertical axis turbines for use in extracting energy from fluid flows have been proposed in the past. A problem which is common to such turbines is that during a rotation of the turbine, a single vane is advanced in the direction of fluid flow in one half of the cycle and must return in the opposite direction to the fluid flow during a second half of the cycle. Therefore, in a multiple vane vertical axis turbine, while one vane is driven in the direction of the fluid flow, by the fluid flow, at least one other vane will be using some of that energy to return in a direction opposite to the fluid flow.

AU 2011 100 453 A4 discloses a fluid driven mill including a plurality of stoppers which restrict the motion of a plurality of plate members.

US 2006/151664 A1 discloses a power transmission device with a plurality of blades and a blade rotating arrangement for maximising the wind bearing size of the blades.

An aim of the present invention is to minimise the amount of energy that is wasted by the fluid resistance of turbine vanes returning in an opposite direction to that of the fluid flow, in order to provide a more efficient turbine. According to the present invention there is provided a vertical axis turbine, comprising:

a body being configured to rotate about a rotational axis; an array of vanes connected to the body and arranged around the rotational axis;

the vanes each having first and second connection points and being connected to the body at the first connection point located to a first side of a centre of pressure of the vane and rotatable, about the first connection point, about an axis substantially parallel with the rotational axis of the body;

the vanes being releasably engagable with the body at the second connection point located to a second side of the centre of pressure of the vane.

By providing vanes which are releasably engagable with the body of the turbine to one side of the centre of pressure of the vane and able to rotate

around a point to the other side of the centre pressure of the vane, when released, the vane is able to freely align itself with the fluid flow, thus presenting an area of least resistance to the fluid flow and minimising the amount of energy which is wasted as the vane returns in the opposite direction to that of the fluid flow.

The turbine may further comprise releasable engagement means for selectively engaging the second connection point with the body. Providing the releasable engagement means on the body allows moving parts of the mechanism to be held on the body, which can allow a simple and efficient design of the vanes.

The releasable engagement means may be configured to prevent rotation of the vane relative to the body in either direction.

The turbine may further comprise control means configured to selectively engage the second connection point depending upon the position of the body. This allows the vanes to be maintained in a certain orientation by the releasable engagement means.

The turbine may further comprise control means configured to control the releasable engagement means to selectively engage the second connection point depending upon the position of the body. The control means may therefore allow the vanes to be fixed relative to the body during a certain part of a cycle or rotation of the turbine and to allow the vanes to freely rotate as required during another part or parts of a cycle or rotation of the turbine.

The selective engagement of the second connection point may be effected synchronously with the rotation of the body of the turbine. This allows the engagement and release of the vane to be correctly synchronised with the rotation of the turbine in order that the vanes are fixed relative to the body during appropriate parts of the cycle or rotation of the turbine and released as required.

The turbine may further comprise a guide vane connected to the control means such that the control means may be adjusted according to a direction of a fluid flow impinging upon the guide vane. This adjustment may be provided by the guide vane itself, but may also be provided indirectly via, for example, a control circuit and further means provided to actuate the control means. Such further means may be electric or hydraulic actuators. However, these actuators tend to use up energy produced by the turbine, thus reducing its useful output.

The engagement means may be arranged to engage the second connection point during a first stage of a revolution of the turbine, and to release the second connection point such that the vane may freely rotate at the first connection point during a second stage of a revolution of the turbine. The first and second stages can correspond to a driven part and a return part of the stroke of the vane, where the driven part occurs where the vane is advancing substantially in the direction of the flow of the fluid, while the return part occurs during the return of the vane in the direction opposite to the fluid flow.

The releasable engagement means may comprise a rotatable gate having a receiving portion which is rotatable about an engagement means axis to releasably retain a corresponding engagement portion located at the second connection point of the vane. This allows the selective engagement and release of the second connection point to be effected by a rotational drive mechanism. Such a rotational drive mechanism may be synchronised with the rotation of the body of the turbine by mechanical drive means such as gears, adjacent wheels engaged with one another by friction, an appropriately arranged pulley system or the like. Preferred examples are described later in this specification.

The turbine may further comprise a drive mechanism for driving the engagement means, the drive mechanism comprising:

> a primary gear (or e.g. friction wheel) located at the rotational axis of the body; and
> a secondary gear, in rotational engagement with the primary gear, and arranged to rotate about a secondary gear axis spaced from the rotational axis of the body.

The provision of such primary and secondary gears can allow the engagement means to be synchronised with the rotation of the turbine.

The secondary gear may be arranged to orbit the primary gear during rotation of the turbine relative to the primary gear. This can allow the rotation of the turbine to create rotation between the primary and secondary gears.

The drive mechanism may comprise a plurality of secondary gears, each secondary gear connected to the engagement means associated with the vanes. This can allow the selective engagement and disengagement of the vanes to be carried out by a mechanical drive mechanism, which may allow the mechanical synchronisation of the engagement means with the movement of the body of the turbine relative to the fluid flow.

The guide vane of the turbine may be connected to the primary gear and may be arranged to align the primary gear relative to the direction of fluid flow. This can allow the simple rotation of the primary gear to control the rotation of the engagement means relative to the direction of the fluid flow, to correctly engage and release the vanes as required.

The drive mechanism may comprise two arrays of one or more secondary gears, the first array arranged in a first plane and the second array arranged in a second plane, to avoid interference of the gears of the second array with the first array. This can allow primary and secondary gears to be selected according to the desired number of teeth, without fear of the teeth of adjacent secondary gears meshing. This is especially relevant when it is desired to utilise secondary gears which have at least the same number of teeth and/or the same diameter as the primary gear. This is of relevance to the use of such gears in the present invention as will be described in more detail in the later described specific examples.

The turbine may comprise an array of six vanes or more. For maximum torque of rotation of the turbine in wind, the greatest vane size is required, which can be maximised by providing as great a distance from the first connection point to the trailing edge of the vane as possible. Six vanes is therefore expected to give a greater torque than using a greater number, for example 8 vanes. As is described in more detail later in this specification, if 8 vanes are used in a turbine described herein, then the maximum length of the vanes themselves is 76% of a distance R from the central axle of the turbine to the first connection points 111 to 161. Where six vanes are used, the maximum length of each vane is very marginally less than R. This can be described by the equation:

$$L = 2 \times R \, ( \, \text{sine } 30 \text{ deg} \, ) \ = \ 2 \times R \, ( \, 0.5 \, ) = R.$$

When used in water, two turbines may be provided, working in tandem as described in more detail later in this specification. The best transfer of energy from linear kinetic energy of the water into rotational kinetic energy of the turbine is expected to be when the leakage of water round to the downstream or "non-power" side of the vanes of both of the turbines, i.e. on the side where the vanes are moving up against the general direction of water flow, is minimised.

The turbine may comprise an array of eight vanes and the central axial part having a diameter of about 24% of a diameter of the turbine at the first connection points. This allows the vanes to be created with an appropriate length which is sufficiently short to be able to pass between adjacent first connection points of adjacent vanes. The greater the number of vanes, the shorter the distance between adjacent first connection points of adjacent vanes. In order to fill gaps between the ends of the vanes when they are orientated radially, towards the centre of the turbine, to minimise leakage flow through the turbine on to the downstream sides of the vanes, the axial part must have a diameter approximately equal to the radius of the turbine at the first connection points of the vanes, minus the length of the vanes from the first connection point to the trailing edge of the vane. This can prevent fluid flow passing through the centre of the turbine and avoiding delivering its energy to the driven vanes.

The invention further provides a turbine assembly comprising:

> a turbine support frame;

at least one support member for supporting the frame on a body of water;

at least one turbine; and

reversible flow guides for concentrating a flow impinging on a first side of the assembly onto the turbine when fluid flows through the assembly in a first direction and arranged to let fluid pass freely through the flow guides when fluid flows through the turbine assembly in a second direction substantially opposite the first direction. The turbine may be a vertical axis turbine, and may be substantially as described herein. The support member may be a floatation member or a fixed foundation for supporting the assembly on or in the body of water by flotation or by mechanical support from a sea or river bed.

The turbine assembly may comprise a pair of turbines arranged to rotate in opposite directions to one another when fluid flows through the assembly.

The flow guide may comprise a plurality of flow guide sections, each flow guide section arranged to rotate about a first flow guide connection point when a fluid flow impinging upon the assembly changes direction.

A first flow guide connection point, of the flow guide section closest to the turbine, may be arranged at least one turbine vane length from the turbine in the direction of expected fluid flow.

The angle of the flow guides relative to the flow impinging upon the assembly may be arranged to gradually decrease toward the turbine. This can provide a smoother transition and smoother fluid flow reaching the turbine.

The flow guides may describe a substantially parabolic form to concentrate the flow on to the turbine.

The flow guides may reduce a width of the flow path at the turbine to around one sixth, or to around 15%, of a width of the flow path at the entrance to the flow guides.

The turbine assembly may further comprise a first flow control panel, arranged upstream of the turbine, to direct flow impinging upon the turbine away from the most upstream vane of the turbine.

The turbine assembly may further comprise a vane control panel, arranged on a side of the turbine on which the vanes travel upstream when flow impinges upon the turbine, the vane control panel arranged to prevent vanes of the turbine from rotating outwardly from the body of the turbine.

The turbine assembly may further comprise lift means for lifting the turbine relative to the support frame to raise the turbine from the body of water for maintenance.

The lift means may comprise hydraulic jacks, a rack and pinion arrangement or car jack (i.e. based on a screw thread, such as found in acro-props used in building industry) or the use of a temporary servicing attachment comprising a lifting frame above the turbine system, powered by means such as a pulley or any other lifting mechanism or machinery. The turbine assembly may be arranged such that the lift means can be temporarily engaged with the turbine assembly to lift the turbine for maintenance. In this way a single lift means may be used for maintenance on a number of separate turbine assemblies at different times.

A renewable power generation installation may be provided comprising:

an array of wind turbines arranged in an area of tidal flow; and

an array of turbines or turbine assemblies according to the present invention;

wherein the turbines are arranged in between foundations of the wind turbines to extract energy from the flow of water between the foundations. The turbines may be attached to the foundations of the wind turbines.

Detailed embodiments of the invention will now be described in relation to the following Figures in which:

Figure 1 shows the top view of a first embodiment of the present invention;

Figure 2 shows a form of a trapped cog or rotatable gate for use in the present invention;

Figure 3 shows a top view of a drive mechanism for use in the present invention;

Figure 4 shows a side view of a turbine according to the present invention;

Figure 5 shows a drive mechanism for use in a second embodiment of the present invention;

Figure 6 shows a side view of a second embodiment of the present invention;

Figure 7 shows an optional flow guide arrangement for use with the turbine of the present invention;

Figure 7A shows an alternative drive mechanism for use in the present invention;

Figure 7B shows an exemplary embodiment of a turbine assembly of the present invention;

Figure 7C shows an embodiment similar to Figure 7B, but with a non-zero phase relationship.

Figure 7D shows an alternative turbine assembly of the present invention;

Figure 8 shows an optional alternative flow guide arrangement for use with a turbine according to the present invention; and

Figure 9 shows a further optional flow guide arrangement for use with a turbine according to the present invention.

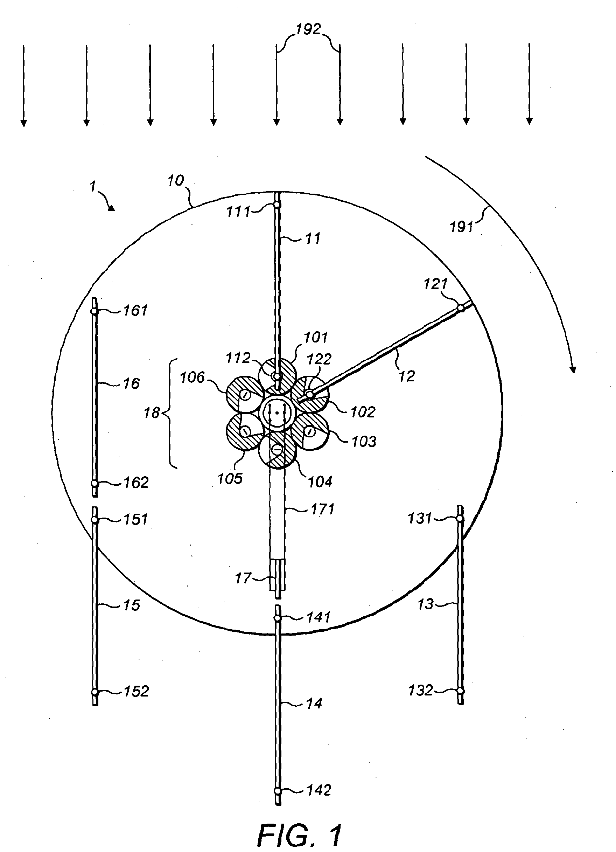

Figure 1 illustrates a turbine 1 according to the present invention. The turbine comprises a body 10 which may take the form of a substantially planar plate and may be in the form of a disk. An array of vanes, in this example six vanes, 11 to 16, are connected to the body 10 at an array of corresponding first connection points 111 to 161 and the vanes are configured to freely rotate about these first connection points.

Each vane comprises a second connection point, 112 to 162. Each of the second connection points may be selectively engaged with releasable engagement means 101 to 106. The releasable engagement means are configured to engage the second connection points to prevent rotation of the vanes in either direction when engaged. When the second connection point is released, then the vane can freely rotate about the first connection point.

Each vane of the turbine will have a centre of pressure at which pressure from fluid impinging on the vane acts. In the case where the vane is a simple rectangular sheet, this centre of pressure will lie on a vertical line, parallel with the vertical axis of rotation of the turbine, which line will be substantially half way along the length of the vane from a leading edge of the vane to a trailing edge of the vane. In this specification, a leading edge relates to the edge of the vane which will naturally be oriented toward the source of fluid flow when the vane is allowed to freely rotate, while the trailing edge is defined as the edge which will be naturally orientated away from the source of fluid flow when the vane is able to freely rotate about the first connection point. The first connection point will be located somewhere between the leading edge and the centre of pressure, while the second connection point will be located on the vane, generally between the trailing edge and the centre of pressure, but could also be located anywhere on the vane which is spaced from the first connection point in a direction of the centre of pressure of the vane and could be between the two.

The turbine 1 also comprises a guide vane 17 attached to the control means 18, the control means being configured to control the release of engagement means 101 to 106, to selectively engage the second connection points of each vane of the turbine. Guide vane 17 is connected to the control means 18 by a guide vane support 171, such that the control means may be adjusted according to the direction of fluid flow impinging upon the guide vane. The control system and guide vane are explained in further detail in relation to later Figures.

The turbine 1 of Figure 1 is capable of rotating in either direction, but in the specific example described, the turbine is rotating clockwise in the direction of arrow 191. To prevent undesirable rotation in both directions, it can be beneficial to mount the turbine on one-way rotation means, such as a ratchet mechanism or similar device preventing reverse motion of the turbine. This can prevent damage to any connected power conversion means where they are sensitive to changes in direction of the turbine.

In the example described, the fluid flow approaches in the direction of arrows 192. As wind approaches in this direction, the resistance offered by paddles 11 and 13 to 16 is very low due to their alignment with the direction of the flow 192, since they are able to rotate around their respective first connection points. Pressure acting at their respective centres of pressure tends to rotate them into this orientation. Vane 12 is engaged by engagement means 102 and is thus held in a substantially radial position relative to the body of the turbine. Wind impinging upon vane 12 therefore creates a moment in the direction of arrow 191 and causes the turbine to rotate, since this moment or torque is greater than that created by any of vanes 15 or 16, which are oriented in the direction of fluid flow. The configuration of engagement means 101 to 106 is such that as the turbine rotates in the direction of arrow 191, each engagement means rotates through the respective positions shown by the shaded portions of each engagement means 101 to 106 as they orbit the central vertical axis of the turbine. The detail of the control mechanism which creates this effect will be described in relation to the later Figures. When each engagement means reaches the position of engagement means 103, the illustrated orientation causes the corresponding second connection point 132 to be released and the corresponding vane 13 can therefore freely orient itself in the direction of fluid flow. This is substantially in the direction of arrows 192, it may be slightly different due to turbulence fluid flow caused by fluid disturbances and non-linear flow around vane 12. As a vane proceeds through the cycle of the turbine through the positions illustrated by vanes 14, 15 and 16 the vane is able to freely rotate relative to the body 10 of the turbine 1 and can continue to orientate itself into a position of minimal resistance with respect to the impinging fluid flow in the direction of arrows 192. Once the vane returns to the position illustrated by vane 11, the corresponding engagement means 101 is oriented in such a position to receive the second connection point 112 and further rotation of the turbine will cause the engagement means 101 to rotate toward the orientation of engagement means 102, to engage the second connection point 112 of vane 11. This results in the vane being substantially fixed relative to the body 10 of the turbine 1 for a portion of the rotation or cycle of the turbine. In such a manner, the selective engagement of the second connection point can be effected synchronously with the rotation of the body of the turbine. The releasable engagement means are also able in this way to selectively engage the second connection points of respective vanes depending upon the position of the body 10. In particular, the position of the body relative to guide vane 17 defines the orientation of engagement means 101 to 106 and so the points at which the engagement means engage and release the second connection points can be set by movement of the guide vane 17 relative to the body of the turbine. Further, the engagement means is arranged to engage the second connection points of respective vanes during a first stage of a revolution of the turbine in the direction of arrow 191 and to releases the second connection point such that the vane may freely rotate about the first connection point during a second stage of a revolution of the turbine. The first stage may be approximately between positions illustrated by vane 11 and vane 12 of Figure 1, while further rotation beyond the position illustrated by vane 12 orients the engagement means of a respective vane such that the second connection point of the vane is released and the vane is able to freely rotate about the first connection point. The second stage may thus be approximately between the positions of vanes 13 up to just before vane 11, or in the range of orientations of approximately 120 degrees to zero degrees relative to the direction of fluid flow, in the direction of rotation of the turbine.

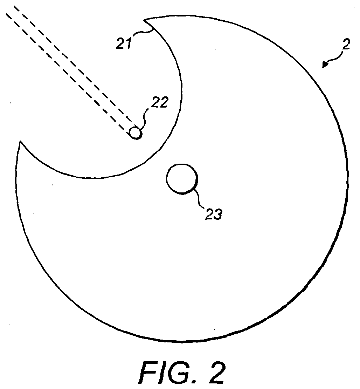

Figure 2 illustrates a rotatable selectively engagable engagement means in the form of a rotatable gate, which comprises a receiving portion 21 for receiving a second connection point 22 of a vane of turbine 1. A second connection point of a vane, represented by point 22 may be received within the receiving portion 21. The profile of the receiving portion is configured such that it prevents lateral movement of second point 22 relative to a radius of the turbine body 10, in either direction, when the second connection point is received in the receiving portion 21. The receiving portion 21 may be substantially symmetrical in order to allow for operation of the turbine in both clockwise or anti clockwise directions. Asymmetrical arrangements may be beneficial, especially when the turbine will only rotate in a single direction in use. The rotatable gate 2 may be rotatable about an axis 23 and may be connected, via an axle oriented along axis 23, to control means for controlling the position of the engagement means during a cycle of the turbine. Adjustments may be necessary to the shape of receiving portion 21 to improve its capabilities in effectively engaging with the second connection points of the vanes.

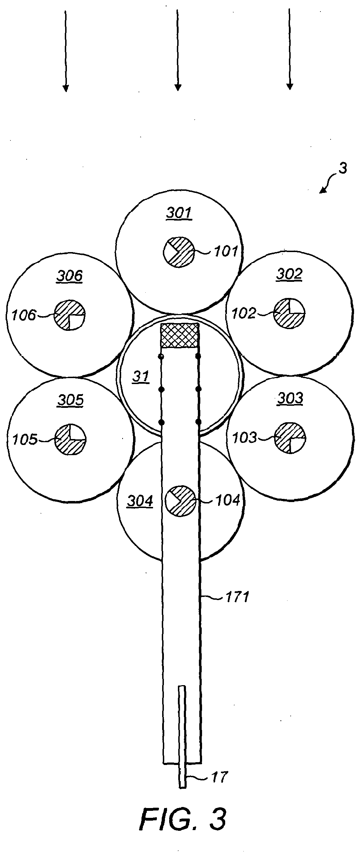

Figure 3 shows a more detailed representation of a control means for controlling the relesable engagement means during rotation of the turbine.

Control means 3 comprises a selection of gears comprising external teeth configured to mesh with one another in a conventional manner. Alternatives such as friction wheels or any other type of meshing gear system may be envisaged.

The control means comprises a primary gear 31 located at the rotational axis of the body and a plurality of secondary gears in rotational engagement with the primary gear 31. The number of secondary gears should generally correspond to the number of vanes and the turbine should generally have the same number of corresponding secondary connection points and releasable engagement means. The orientation of the releasable engagement means connected to each gear is indicated schematically by shaded sections 101 to 106. The engagement means will generally be attached either directly to the array of gears or along axles about which the gears and engagement means rotate. The use of axles is beneficial as it can allow the gears to be located remotely from the engagement means, which can be particularly beneficial when the turbine is being used in water and it is desired to keep the gears remote from the water to avoid problems of corrosion. For the gears to achieve the mode of operation described in relation to Figure 1, the secondary gears should be of substantially the same size and, in particular, have the same number of teeth as the primary gear 31. As can be seen from the illustration of Figure 3, if the gears are all of the same size, then the secondary gears will tend to mesh with one another and relative rotation will be prevented. To avoid this, the gears can be arranged on different levels or plans from one another. The gears can be arranged on two separate planes, the first plane comprising gears 1, 3 and 5, while gears 2, 4 and 6 are arranged on a second plane. This can avoid problems of adjacent gears meshing with one another and allows the desired relative motion of the secondary gears around the primary gear 31.

As can be determined from the diagram, when a secondary gear, such as 301, has orbited through 180 degrees about primary gear 31, its total rotation will be 360 degrees. This is due to the meshing of the primary and secondary gears during their rotation. Therefore, if the gears 301 to 306 are mounted to, and able to rotate relative to, the body 10 of turbine 1, and primary gear 31 is able to freely rotate relative to the body 10 and is held in a constant orientation relative to the impending fluid flow by a guide vane 17, then the second gears will repeatedly orbit the primary gear 31, moving corresponding engagement means through the orientations illustrated by shaded areas 101 to 106.

This arrangement of primary and secondary gears with a guide vane 17 connected to the primary gear, results in the orientations of the engagement means relative to the direction of the flow in the impinging on the guide vane 17 being substantially constant. Accordingly, the guide vane 17 can control and adjust the control means according to a direction of a fluid flow impinging on the guide vane.

The illustrated example shows a mechanical system which provides gears to control the release and engagement of the engagement means with the second connection points of the vanes. However, the guide vane may alternatively be connected to electronic control means, which may in turn be connected to mechanical control means such as electric motors, servos or hydraulic actuators, in order to control the engagement and release of the engagement means during the rotation of the body of the turbine. However, the mechanical system is generally the simplest, most robust and most energy efficient system, since it requires no energy input other than that arising from the fluid flow impinging upon the turbine and the guide vane.

It will be appreciated from the Figure that when gear 301 moves around to the position occupied by gear 303, its axis, if connected to the body, has rotated through an angle of 120 degrees. If there were no frictional or toothed engagement between the primary and secondary gears and these were held fixed relative to each other by connection to the body 10 of the turbine 1, the gear 301 would have shown rotation of the same 120 degrees. However, since the gears are able to rotate relative to the body of the turbine and the gears do have teeth equally spaced around a gear of equal radius, the gear also rotates about its axis by 120 degrees, since the primary gear stays fixed relative to the fluid flow. This gives the total rotation of the gear as it moves between position 301 and position 303 of 240 degrees. In the same manner, when the same gear reaches the position shown by gear 304, the gear has made a rotation around the central axis of 180 degrees, but the total rotation experienced due to the engagement of the teeth of the gears is through an angle of 360 degrees.

As can be seen, the engagement means connected to gear 301 is orientated at approximately 270 degrees relative to the direction of fluid flow and it can receive the second connection point, which may be a simple pin or other means suitable for being received in the receiving portion of the engagement means described in Figure 2, and will engage this connection until it reaches a position approaching a position of gear 303, by which point the receiving portion is orientated at approximately 150 degrees relative to the direction of fluid flow.

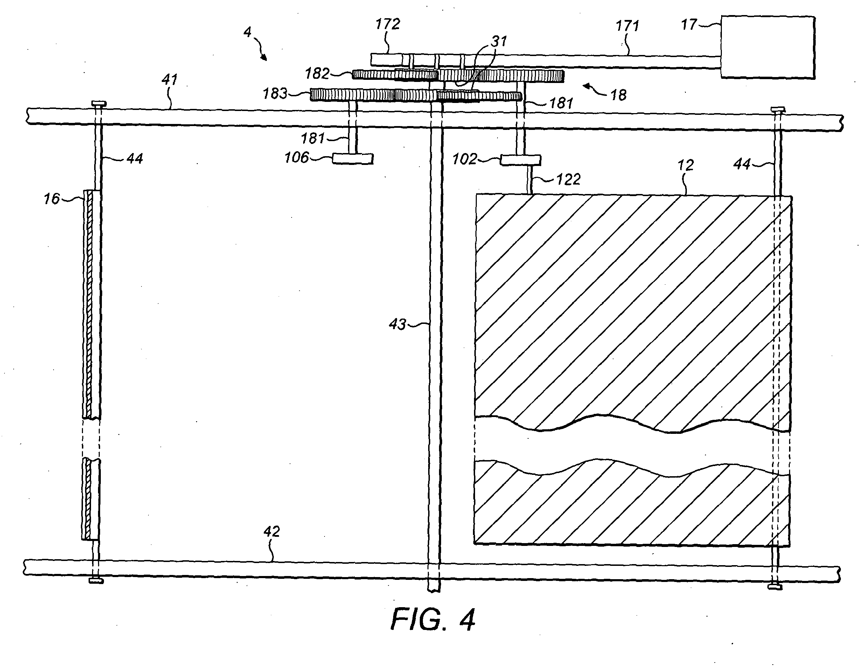

Figure 4 illustrates a side view of a turbine according to the present invention. The turbine 4 comprises a top plate 41 and an opposing bottom plate 42. These are connected by a central axle 42 about which the body of the turbine 4 can rotate. Vane axles 44 are also provided and can provide the secondary function of connecting the top and bottom plates, as well as allowing the vanes to freely rotate around their first connection points, which are also the connections to the vane axles 44.

Control mechanism 18 is connected via control axles 81 to engagement means 102 and 106. Second connection point 122 of vane 12 is illustrated engaged with engagement means 102 to the right hand side of Figure 4 as viewed. Vane 16 is orientated substantially perpendicular to the plane of the page, presenting its smallest cross section to the viewer. In a situation where the direction of flow were into the page when viewing Figure 4, vane 12 would therefore be being driven away from the viewer, and vane 16 would be advancing towards the viewer. In that situation, guide vane 17 would also be orientated away from the viewer similarly to vane 16. However, vane 17 is illustrated in a side-on orientation to show guide vane support beam 171 and guide vane counterbalance 172, which may be added to counter balance the weight of guide vane 17 and its support beam 171. First and second planes, 182, 183, of gears are also illustrated meshing with two primary gears 31 mounted in the different planes. The arrangement may optionally have a single primary gear deep enough to mesh with two planes of secondary gears.

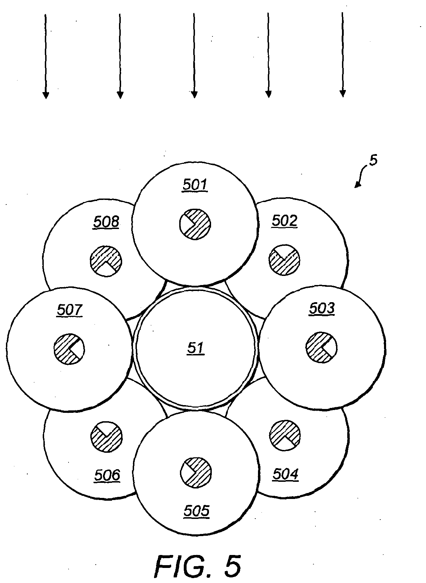

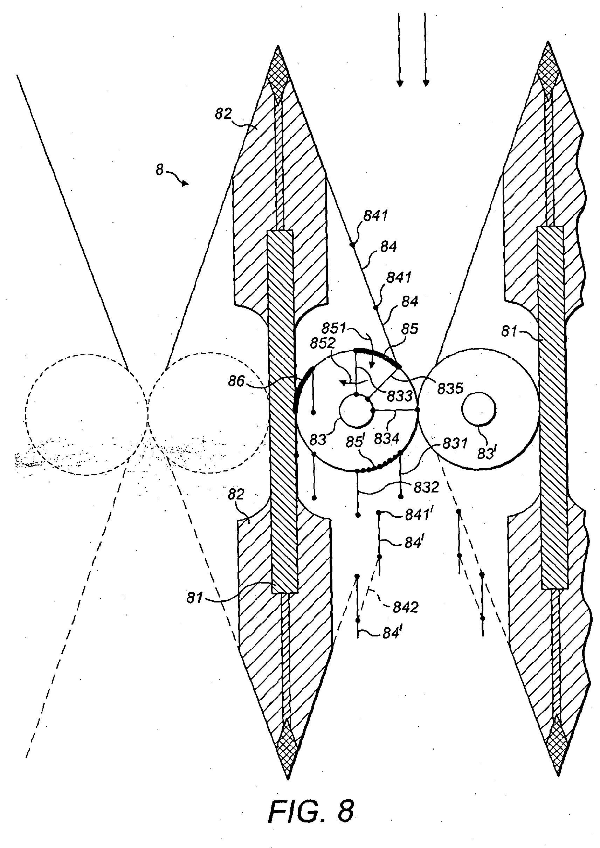

Figure 5 shows an alternative control means 5, for use with a turbine comprising eight vanes. The control means comprises a primary gear 51 and eight secondary gears arranged around the primary gear. Here the advantage of two separate planes of gears engaging with primary gear 51 can be more clearly seen. A first upper array of gears may comprise gears 501, 503, 505 and 507, while a second lower array may comprise gears 502, 504, 506 and 508. The respective rotational positions of engagement means connected to the gears are shown by the central shaded portions, in the same way as is described in relation to Figures 1 and 3. The primary and secondary gears are all of the same size/have the same number of teeth, and therefore the relative rotation of the eight secondary gears as they orbit the primary gear 51 is the same as is described in relation to Figure 3, but with 8 secondary gears instead of six secondary gears. It is believed that the use of eight vanes will produce greater efficiency than using six vanes, and this is particularly the case when the turbine is used in water or other liquid flow situations, as is described in more detail with reference to Figure 8.

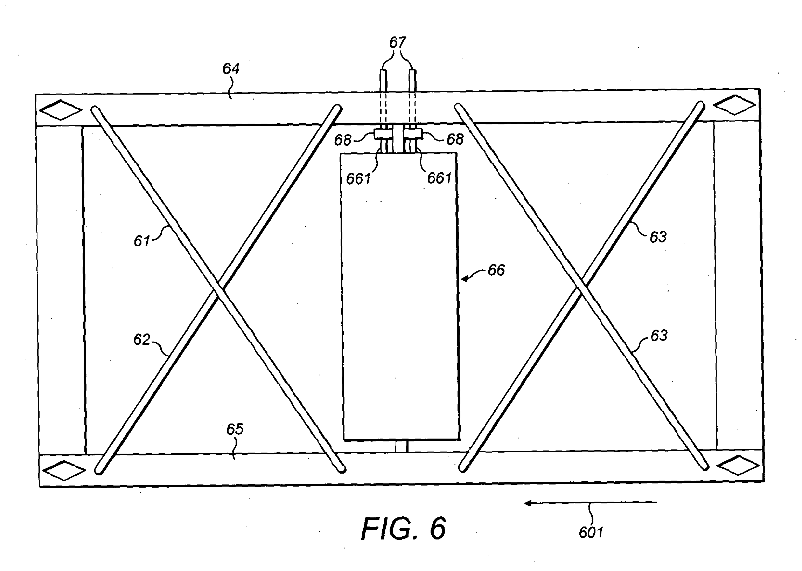

Figure 6 illustrates the structure of a turbine frame, for supporting the rotating elements of the turbine, viewed parallel to the water flow. In this illustration, water flows in the direction of arrow 601. The turbine frame is provided with cross bracing upstream and downstream of the turbine vanes, comprising first and second diagonal members 61, 62 and equivalent members 63 and 64 located upstream of the vanes.

The turbine frame comprises top bars 64 and bottom bars 65. These are provided with a diamond-shaped, or other low-drag, cross section, in order to present minimal resistance to fluid flow. A turbine vane 66 is illustrated toward the centre of the turbine. Axles 67 for transferring motion between the secondary gears (not illustrated) and the engagement means 68 are shown. Secondary connection points 661 of the turbine vane 66 are illustrated in this example as simple pins.

The turbine may be used in water, for one-directional or river flow, or it may also be used in varying directional flows, such as tidal flows. In either of these cases, the turbine can be slung below a floating barge or pontoon. The rotation of the central axle of the turbine may be transferred by a shaft up to a generator cited above the pontoon in order that electrical components can be kept out of the water for electrical safety and this can also reduce the costs of water and weatherproofing of these components.

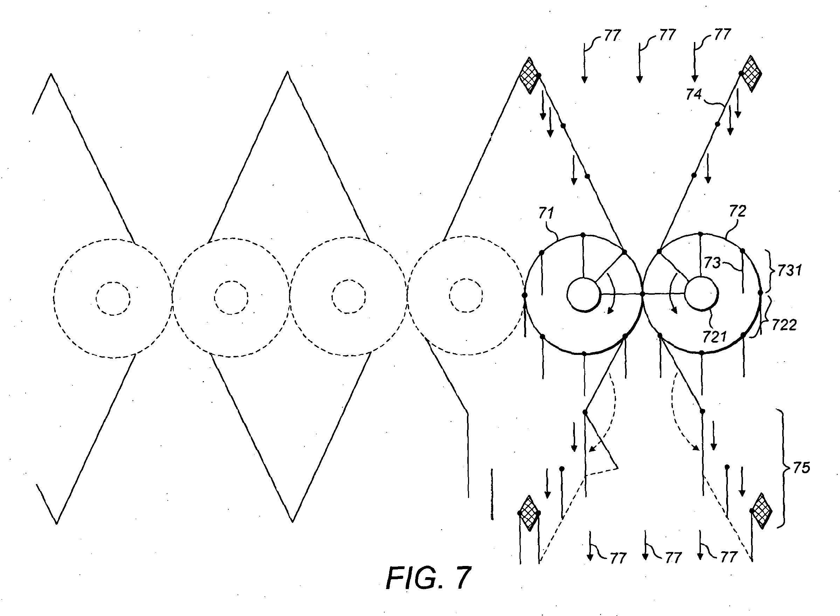

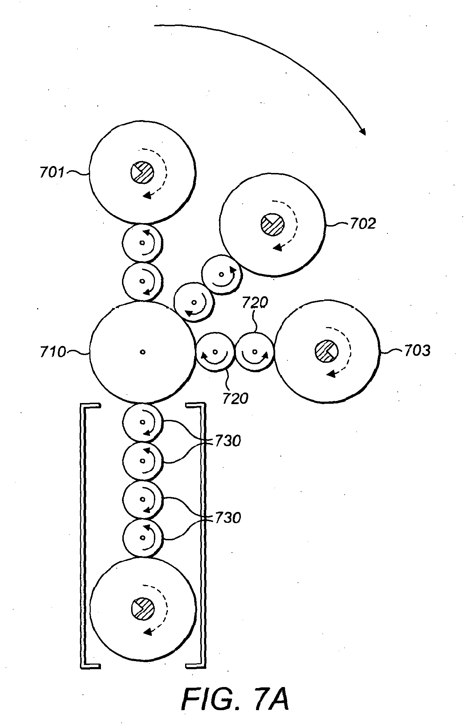

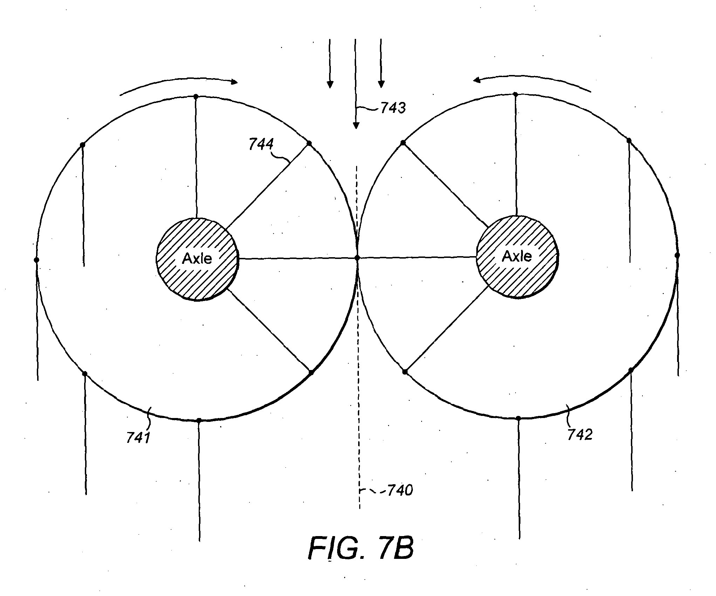

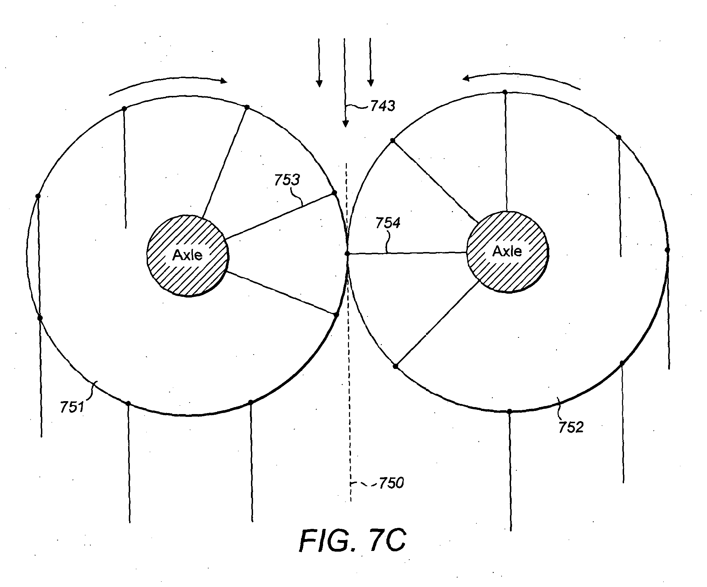

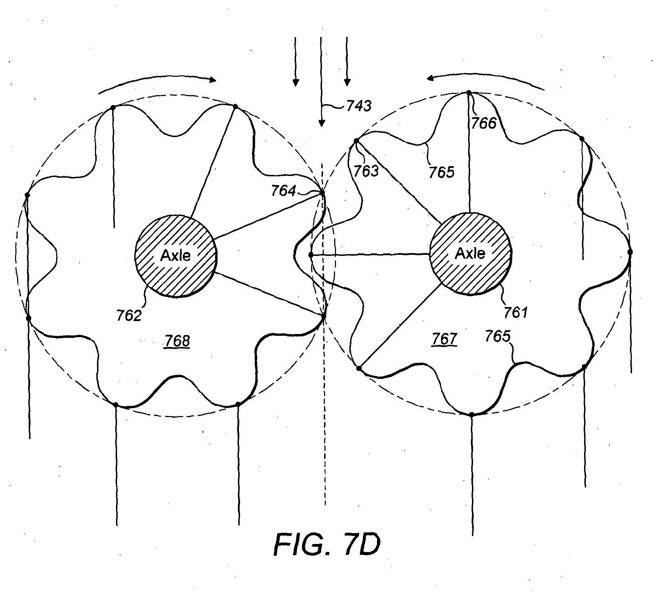

The water implementation of the turbine, illustrated in Figure 7, uses the ability of the turbine to rotate without much, if any, adjustment from the flow sensing guide vane described in relation to the earlier embodiments, which is generally more useful in wind-power applications, where flow-direction can be more variable. In general, the water-based implementation is most efficiently used with a first turbine in tandem with a second turbine, generally of equal dimensions, and arranged such that the distance between central axles of the two turbines is the same as, or slightly over, twice the radius of the two turbines. Such an arrangement is illustrated in Figure 7. Multiple pairs of turbines may be arranged adjacent to one another, to provide a wider bank of turbines to extract the maximum energy from a river or tidal flow. Two turbines, illustrated schematically as 71 and 72 in Figure 7 rotate in opposite directions and the rotation of the two may optionally be linked together to maintain a constant phase relationship. The phase relationship between them may be a phase angle of between 0 degrees and 22.5 degrees, where the turbines have eight vanes. Whatever the number of vanes, the phase relationship may advantageously be 0 degrees, such that first connection points of the adjacent turbines 71 and 72 substantially meet at the mid point between the turbines as illustrated in Figure 7. Alternatively, the phase relationship may be half of the angle between two blades, i.e. 22.5 degrees for an eight blade turbine pair, as this may provide a smoother motion. The phase relationship may be anywhere between these two angles and the phase angle range can be calculated in the same way for turbines with different numbers of blades, i.e. from 0 degrees to a half of the angle between two adjacent blades. The combined power from the two turbines may be transferred by a chain and sprocket, gear or pulley system to deliver the power from the single pair of turbines to a single generator.

As concerns the control mechanism illustrated in Figure 5, the primary gear will most likely be fixed relative to the pontoon to which the turbines are mounted and the floating barge or pontoon may be orientated in its entirety relative to the fluid flow by the action of the fluid flow on the entire floating arrangement. In this way the guide vane described in relation to Figures 1 to 3 is not essential, but may optionally be used to improve the system's adaptation to changes in fluid flow direction if necessary.

As can be seen in Figure 7, the eight vane turbine has a relatively large central axle 721. This is to allow for the fact that the length 731 of a vane 73 must be shorter than a distance 722 between first connection points of the turbine, in order for the vane to rotate through a full revolution about its first connection point. In the illustrated eight-vane case, the maximum length of each vane must therefore be restricted to approximately 76 percent of the radius of the turbine pivot point. To ensure the minimum loss of water power by water freely flowing between ends of the vanes, the central axle 721 must fill the central space between the ends of the vanes and therefore in the illustrated eight vane case, the central axle 721 must occupy approximately 24 percent of the radial distance from the centre to the first connection points.

For any number of vanes, this percentage can be calculated as follows.

First connection points 111 to 161 in Fig 1, are considered to be at a distance of 'R' from the centre of the central axis of the turbine 1. The distance between adjacent first connection points, e.g. between 111 and 121 is taken to be 'L'. The maximum length of the vanes 11 to 16 must be marginally less than this value 'L'.

For 8 vanes L = 2 x R (sine 22.5 degrees) i.e. L = 0.7654 R.

If the lengths of the vanes 11 to 16 are 76% of R, this just meets the condition required above.

A general formula for this maximum length, L, of each vertical power vane, which will allow adjacent vanes to clear each other during rotation for a turbine with N vanes, is given by the relationship:

L is just less than 2 x R (sine (360/2N) degrees)

Figure 7 further illustrates an assembly comprising two turbines according to the present invention and a set of water flow guides, which are adapted to channel water flow impinging upon the turbine assembly. The turbines may be as described herein, but the arrangement may work with other standard vertical axis turbines or other types of turbines, although use of the vertical axis turbines described herein is preferred. The water flow guides are arranged to take the full width of the water flow impinging on the two turbines, i.e. the width of two diameters of the turbines of the system, and the flow guides 74 are arranged to channel that flow down to a width smaller than the full width of the two turbines. In the illustrated arrangement, the guides on the upstream side of the turbines confine the water flow to about one sixth of the previous width. This restriction can increase the concentration of energy impinging upon the turbine to extract greater energy from the fluid flow.

Whilst the water is flowing in this direction the guides are maintained in a first orientation relative to the turbine and support frame as illustrated. If the water begins to flow in the opposite direction, these guides can then, either via active actuation, or by the action of the fluid flow, move to a second, downstream orientation. This downstream orientation is illustrated by the downstream set of flow guides 75 in Figure 7. This will generally happen when the turbines are in use in tidal flow and the flow of the tide changes direction. When the change of flow direction occurs, the previously downstream flow guides 75 will be orientated to concentrate the flow on to the turbines as illustrated by flow guides 74. Orientation of all of the water flow guides will therefore be reversed and the rotation of the turbines will also reverse as the flow direction reverses from that illustrated by arrows 77.

Figure 7A shows alternative arrangements of a turbine in accordance with the invention. In the figure the directions of rotation of the overall turbine and each gear are indicated by curved arrows. Where the horizontal dimensions of the turbine are large, the diameter of the central axle 721, which is required to ensure a minimal gap between the axle and the ends of the vanes, will also be proportionally large. This may mean that the diameter of the central gear or wheel, 51 on fig. 5, and the diameter of the secondary gears/wheels 501 to 508, will themselves be proportionally large. The use of spacer gears/wheels 710, working preferably in pairs (to preserve the direction of rotation of the secondary gears/wheels), as illustrated in Fig. 7A, can reduce the dimensions of these main gears /wheels 701, 702... etc. The number of teeth 'N' on, and the radius 'R*' of, the central gear/wheel 710 should be equal to the number of teeth and radius of the secondary gears/wheels 501 to 508, or 701, 702... etc. The number of teeth, 'n', and the radius, 'r', of the pairs of spacing gears/wheels 720 must be matched to preserve the desired phase relationship between the rotation of the turbine and the rotation of the engagement means or gates 101, which capture and release the connection points 111 of the vertical power vanes.

Figure 7A shows two examples, the first of which employs two such spacer gears/wheels 720 for each gate 101. On this same diagram an alternative situation is illustrated of how four spacer gears/wheels 730 may be utilised. When spacer gears/wheels are used, it may be that all the gears/ wheels above the top plate (41 in fig. 4) plus the spacer gears/wheels may work in a single array with them all in the same plane, since the teeth of the various secondary gears may not mesh adversely with each other in this arrangement. In practice any number of spacer gears or wheels 720, 730, generally in pairs may be used to provide adequate spacing from the central axle 721.

Should there be space within the central axle 721 of the turbine, it may permit the housing of the vertical shafts which connect the secondary gears/wheels with the engagement means or gates, these latter are used to constrain and release the inner end of the vertical power vanes at the appropriate stage in the rotation of the turbine. There may therefore be provided a vertical axis turbine further comprising at least one pair of counter-rotating gears or wheels disposed between the primary and secondary gears to transfer rotational movement therebetween.

Figure 7B shows two eight vane turbines 741 and 742 , when the relative phase relationship of the two turbines is zero degrees, in that the vanes align substantially with one another when in a position nearest to the opposing turbine. At the position illustrated the rate of flow of water or other fluid between the turbines along the centre line 740 is at a minimum. As the two turbines 741, 742 rotate under the influence of the water flow indicted by arrows 743, the speed of the water passing between the two axles rises to a maximum before reducing once again to a minimum after each turbine has rotated by approximately 45 degrees. The flow rate is continually changing. For turbines with N vanes 744 this 45 degree angle equals (360/N) degrees.

Under the arrangement of an eight vane turbine, as illustrated in Figure 7C, where the phase relationship is non-zero and preferably approximately 22.5 degrees or one sixteenth of a full circle (360 degrees), the minimum flow rate is not as low as the lowest value in the arrangement illustrated in Figure 7B. For a turbine with N vanes, this phase angle illustrated in Figure 7C is approximately (180/N) degrees. There is therefore provided a turbine assembly, wherein the pair of turbines are constrained to rotate in opposite directions at a phase relationship angle approximately equal to 180 degrees divided by the number of vanes in either or each turbine.

The flow oscillates to either side of the line of symmetry 750 as it passes between the two turbines 751, 752 and around the vanes 753, 754. The average power transfer from the water flow to the turbine may be greater than in the assembly shown in Figure 7B.

In yet another arrangement, here shown in Figure 7D, also with eight vanes, where the phase relationship is once again 22.5 degrees, the extent of the oscillation of the water flow either side of the line of symmetry is likely to be greater than in the situation illustrated in Figure 7C. For a turbine with N vanes this phase angle is also approximately (180/N) degrees. During this greater oscillation of the water flow the average power transfer to the turbine rotation may increase yet further. In this arrangement the distance between the centres of the axles 761, 762 is less than twice the distance between the first connection point 763, 764 (or 111 to 161 in Fig. 1) and the centre of the axle 761, 762 (otherwise stated, less than twice the "radius" of the turbine). The maximum power transfer from the water flow to the turbine rotation may be achieved at different reductions of the distance between the centres of the axles depending upon the "radius" of the turbines.

The outline of the top plate and the corresponding bottom plates (41 and 42 of Fig. 4) may need to take a 'webbed' shape resembling the "webbing between the toes of a duck's foot" so that the top plates of turbines 71 and 72 can mesh without contact and still permit the intended action of the turbine's vanes. A possible arrangement of the top plate is indicated in Figure 7D. The bottom plates will probably take a similar shape to that of the top plates shown. Such top plates have an area of reduced diameter 765 substantially between the first connection points 763, 766, which can be arranged to allow a vane of an opposing turbine 768 to enter the overall radius of the turbine 767. These areas of reduced diameter can allow the turbines to mesh such that vanes of opposing turbines can interleave, or pass between one another, as the turbines rotate. There is therefore provided a turbine assembly wherein a distance between centres of rotation of a pair of turbines is less than twice the distance between a centre of rotation of at least one of the turbines and a first connection point of the turbine. The distance between centres of rotation of the pair of turbines may alternatively be less than the sum of the distances between the respective centres of rotation of each of the turbines and a respective first connection point of each turbine.

Figure 8 illustrates a suitable floating assembly for the system of the present invention. The assembly 8 comprises a turbine support frame 81, which may be in two parts, and the two parts illustrated may be connected above or below the water by frame connection members (not shown). The support frame comprises at least one buoyancy member 82, which may be integrally formed with, or a separate part from, the support frame. The buoyancy member or members will be formed from any kind of suitable buoyancy device and may be made from closed cell foam, which is resistant to the ingress of water. Suspended on the turbine support frame are flow guides 84 for directing water flow to the pair of turbines 83 and 83' although the detail is only described with respect to the left turbine 83, a substantially symmetrical arrangement will be provided on the right side of the diagram upstream and downstream of turbine 83'.

As in Figure 7, flow guides 84 are again pivotable about flow guide connection points 841. As can be seen in the downstream side of the diagram, the flow guides 84' pivot away from their first, flow-guiding, orientation, to their second orientation, and their motion may be synchronised with a connecting member 842. The connecting point 841', nearest to the turbine 83, is arranged sufficiently distant from the turbine substantially in the direction of fluid flow, so that the vanes 831 and 832 do not interfere with it when the turbine is rotating.

A front vane control panel 85 is provided on the upstream side of the turbine and may occupy the position 85' when the flow direction is reversed. This panel is provided in order to prevent flow in the direction of arrow 851 from creating an outward force in a direction of arrow 852 on to vane 833 of turbine 83. If this were not provided, the water flow might push the vane 833 away from the engagement means before it had sufficiently engaged. The position of the panel may be moved either by a lever which is pushed by the change in water direction, or by a motor, which is controlled by a control system taking input from a water flow direction sensor.

A second vane control panel 86 is also provided to ensure that the turbine vanes are correctly orientated within the radius of the turbine as they approach the upstream side of the turbine. A gap is shown, to allow some flow between panels 85 and 86 in order to help to correctly orient the vanes in the direction of flow as they approach the position of vane 833 to engage with their respective engagement means. Each of panels 85 and 86 may be curved, but their exact form is not essential to their general function and a variety of substantially equivalent forms could provide a similar function.

With reference to turbine 83 in Figure 8, at the stage of rotation shown, the in-flowing water fills the sector between vane 834 oriented at 090 degrees and vane 835 oriented at 045 deg, and is actively pushing on vane 834 orientated at 090 degrees. As soon as the turbine rotates a few degrees more in a clockwise direction from the position shown, water can begin to fill the sector now shown at 045 to zero degrees, to impinge upon vane 833. But for the curved panel 85, water would leak back round the left hand side of the turbine as shown in the Figure. If the turbine had just six vanes, the angle to be covered to prevent this leakage round the wrong side of the turbine would need to be greater. It is expected that dividing the volume of the turbine into smaller angled sectors ensures the most beneficial flow of water against the desired vanes and reduces problems of loss of efficiency due to leakage of the flow to the wrong side of the turbine as much as possible.

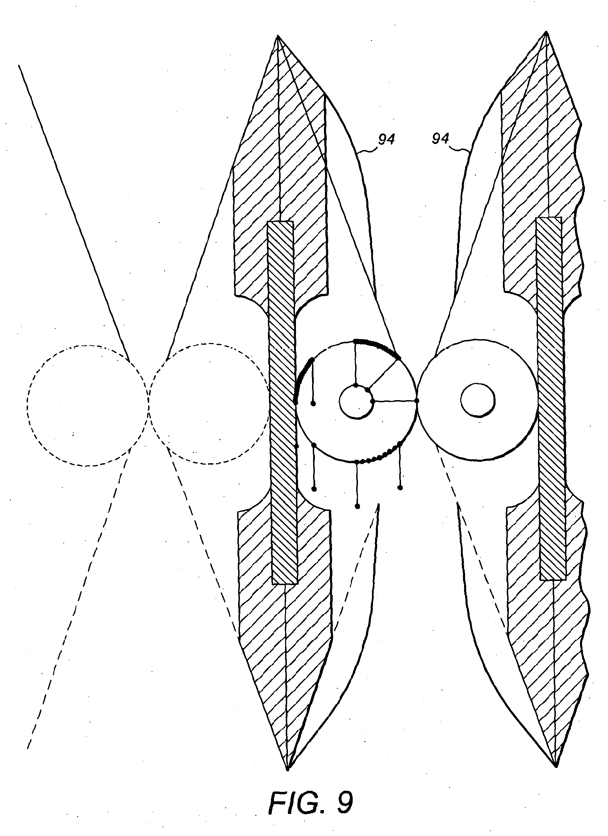

Figure 9 shows an alternative form for the flow guides 94 of the turbine assembly illustrated in Figure 8. The general function of the assembly is the same as is described in relation to Figure 8. However, the illustrated form of the flow guides may be more beneficial as compared to the straight line illustrated in Figure 8. The form is substantially parabolic and this may provide an efficient concentration of the water flow on to the turbine blades due to the smoother transitions in flow direction as the flow approaches the turbines.

Accordingly, the present invention also provides a turbine assembly comprising a turbine support frame, at least one flotation member for supporting the frame and at least one, or a pair of, rotating turbines, which may be suspended adjacent the surface of a body of water on which the flotation member and frame are floating. The assembly may further comprise reversible flow guides for concentrating flow on to a first side of the turbines when fluid flows through the assembly in a first direction and arranged to let fluid pass freely through the flow guides, with minimal resistance to the fluid flow when the fluid flow direction through the turbine assembly is reversed, by being oriented in a direction substantially parallel with the direction of fluid flow.

Maintenance of the turbines is also an important factor and the turbines of the assembly may therefore be arranged on a movable part of the support frame, the movable part being actuated by either hydraulic means, or a rack and pinion system, such as is used in steering systems for cars or in car garage car lifting systems.

Numerous solutions are available for anchoring the turbine assembly to a river or sea bed, such as an anchor or anchors, about which the assembly may be able to pivot to align itself with the direction of fluid flow. Alternatively, the assembly may be mounted upon fixed foundations, in which case, the buoyancy or flotation devices described may be unnecessary. Where a wind farm is located at sea, the turbine and/or assembly of the present invention may be mounted to, or in between, the foundations of the wind turbines to make double-use of the site and/or the foundations for power generation from both tidal flows and wind currents in coastal or marine areas. Such a combined arrangement of wind and tidal turbines may be beneficial with other turbines suitable for extracting energy from a tidal flow, not necessarily requiring all of the features of the turbine of the present invention.

**Claims**

1. A vertical axis turbine, comprising:

   a body (10) being configured to rotate about a rotational axis;
   an array of vanes (11,12,13,14,15,16) connected to the body (10) and arranged around the rotational axis;
   the vanes (11,12,13,14,15,16) each having first (111,121,131,141,151,161) and second (112,122,132,142,152,162) connection points and being connected to the body (10) at the first connection point (111,121,131,141,151,161), located to a first side of a centre of pressure of the vane (11,12,13,14,15,16) and being rotatable, about the first connection point (111,121,131,141,151,161), about an axis substantially parallel with the rotational axis of the body (10);

the vanes (11,12,13,14,15,16) being releasably engagable with the body (10) at the second connection point (112,122,132,142,152,162), located to a second side of the centre of pressure of the vane (11,12,13,14,15,16); and

releasable engagement means (101,102,103,104,105,106) for selectively engaging the second connection point (112,122,132,142,152,162) with the body (10); wherein

the releasable engagement means (101,102,103,104,105,106) is configured to prevent rotation of the vane (11,12,13,14,15,16) relative to the body (10) in either direction when engaged.

2. A vertical axis turbine according to claim 1, wherein the turbine further comprises control means (18) configured to control the releasable engagement means (101,102,103,104,105,106) to selectively engage the second connection point (112,122,132,142,152,162) depending upon the position of the body (10).

3. A vertical axis turbine according to any of claims 1 to 2, wherein the selective engagement of the second connection point (112,122,132,142,152,162) is effected synchronously with the rotation of the body (10) of the turbine.

4. A vertical axis turbine according to any of claims 2 or 3, further comprising a guide vane (17) connected to the control means (18) such that the control means (18) may be adjusted according to a direction of a fluid flow impinging upon the guide vane.

5. A vertical axis turbine according to any of claims 1 to 4, wherein the releasable engagement means (101,102,103,104,105,106) is arranged to engage the second connection point (112,122,132,142,152,162) during a first stage of a revolution of the turbine and to release the second connection point (112,122,132,142,152,162) such that the vane may freely rotate about the first connection point (111,121,131,141,151,161) during a second stage of a revolution of the turbine.

6. A vertical axis turbine according any of claims 1 to 5, wherein the releasable engagement means (101,102,103,104,105,106) comprises a rotatable gate having a receiving portion which is rotatable about an engagement means (101,102,103,104,105,106) axis to releasably retain a corresponding engagement portion located at the second connection point (112,122,132,142,152,162) of the vane (11,12,13,14,15,16).

7. A vertical axis turbine according to claim 6, wherein the control means (18) comprises a drive mechanism for driving the engagement means (101,102,103,104,105,106), the drive mechanism comprising:

a primary gear (31) located at the rotational axis of the body; and
a secondary gear (301,302,303,304,305,306) in rotational engagement with the first gear (31) and arranged to rotate about a secondary gear axis spaced from the rotational axis of the body.

8. A vertical axis turbine according to claim 7, further comprising at least one pair of counter-rotating gears (720) or wheels disposed between the primary and secondary gears to transfer rotational movement therebetween.

9. A vertical axis turbine according to claim 7 or claim 8, wherein the secondary gear (301,302,303,304,305,306) is arranged to orbit the first gear during rotation of the turbine relative to the first gear (31).

10. A vertical axis turbine according to any of claims 7 to 9, wherein the drive mechanism comprises a plurality of secondary gears (301,302,303,304,305,306), each secondary gear (301,302,303,304,305,306) connected to engagement means associated with one of the array of vanes (11,12,13,14,15,16)..

11. A vertical axis turbine according to any of claims 7 to 10, when dependent upon claim 5, wherein the guide vane (17) is connected to the primary gear (31) and is arranged to align the primary gear (31) relative to the direction of fluid flow.

12. A vertical axis turbine according to any of claims 7 to 11, wherein the drive mechanism comprises two arrays of one or more secondary gears (501,503,505;502,504,506), the first array arranged in a first plane and the second array arranged in a second plane to avoid interference with the first array.

13. A renewable power generation installation comprising:

   an array of wind turbines arranged in an area of tidal flow; and
   an array of vertical axis turbines according to any of the preceding claims;
   wherein the turbines are arranged in between foundations of the wind turbines to extract energy from the flow of water between the foundations.

14. A turbine assembly comprising:

   a turbine support frame;
   at least one support member for supporting the frame on a body of water;
   at least one turbine according to any of claims 1 to 12; and
   reversible flow guides (74, 75) for concentrating a flow impinging on a first side of the assembly onto the turbine when fluid flows through the assembly in a first direction and arranged to let fluid pass freely through the flow guides when fluid flows through the turbine assembly in a second direction substantially opposite the first direction.

15. A turbine assembly comprising:

   a turbine support frame;
   at least one support member for supporting the frame on a body of water;
   a pair of turbines according to any one of claims 1 to 12, arranged to rotate in opposite directions to one another when fluid flows through the assembly.

**Patentansprüche**

1. Turbine mit vertikaler Achse, umfassend:

   Einen Körper (10), der konfiguriert ist, sich um eine Drehachse zu drehen;
   eine Anordnung von Schaufeln (11,12,13,14,15,16), die mit dem Körper (10) verbunden und um die Drehachse herum angeordnet sind;
   wobei die Schaufeln (11,12,13,14,15,16) jeweils erste (111,121,131,141,151,161) und zweite (112,122,132,142,152,162) Verbindungspunkte aufweisen und mit dem Körper (10) am ersten Verbindungspunkt (111,121,131,141,151,161) verbunden sind, der sich an einer ersten Seite eines Druckzentrums der Schaufel (11,12,13,14,15,16) befindet und um den ersten Drehpunkt (111,121,131,141,151,161) herum, um eine Achse drehbar ist, die im Wesentlichen parallel mit der Drehachse des Körpers (10) ist;
   wobei die Schaufeln (11,12,13,14,15,16) lösbar mit dem Körper (10) am zweiten Verbindungspunkt (112,122,132,142,152,162) kuppelbar sind, der sich an einer zweiten Seite des Druckzentrums der Schaufel (11,12,13,14,15,16) befindet; und
   lösbare Kupplungsmittel (101,102,103,104,105,106) zum selektiven Kuppeln des zweiten Verbindungspunkts (112,122,132,142,152,162) mit dem Körper (10); wobei
   das lösbare Kupplungsmittel (101,102,103,104,105,106) konfiguriert ist, Drehung der Schaufel (11,12,13,14,15,16) relativ zum Körper (10), wenn gekuppelt, in beide Richtungen zu verhindern.

2. Turbine mit vertikaler Achse nach Anspruch 1, wobei die Turbine ferner Steuerungsmittel (18) umfasst, die konfiguriert sind, die lösbaren Kupplungsmittel (101,102,103,104,105,106) zu steuern, um den zweiten Verbindungspunkt (112,122,132,142,152,162) in Abhängigkeit von der Position des Körpers (10) zu kuppeln.

3. Turbine mit vertikaler Achse nach einem der Ansprüche 1 bis 2, wobei das selektive Kuppeln des zweiten Verbindungspunkts (112,122,132,142,152,162) synchron mit der Drehung des Körpers (10) der Turbine bewirkt wird.

4. Turbine mit vertikaler Achse nach einem der Ansprüche 2 oder 3, die ferner eine Führungsschaufel (17) umfasst, die mit dem Steuerungsmittel (18) derart verbunden ist, dass sich das Steuerungsmittel (18) in Übereinstimmung mit einer Richtung einer Flüssigkeitsströmung einstellen lässt, die auf die Führungsschaufel auftrifft.

5. Turbine mit vertikaler Achse nach einem der Ansprüche 1 bis 4, wobei das lösbare Kupplungsmittel (101,102,103,104,105,106) eingerichtet ist, sich mit dem zweiten Verbindungspunkt (112,122,132,142,152,162) während einer ersten Umdrehung der Turbine zu kuppeln und den zweiten Verbindungspunkt (112,122,132,142,152,162) derart freizugeben, dass sich die Schaufel frei um den ersten Verbindungspunkt (111,121,131,141,151,161) während einer zweiten Stufe einer Umdrehung der Turbine drehen kann.

6. Turbine mit vertikaler Achse nach einem der Ansprüche 1 bis 5, wobei das lösbare Kupplungsmittel (101,102,103,104,105,106) ein drehbares Tor mit einem Aufnahmeabschnitt umfasst, der um eine Achse des Kupplungsmittels (101,102,103,104,105,106) drehbar ist, um einen entsprechenden Kupplungsabschnitt lösbar zu halten, der sich am zweiten Verbindungspunkt (112,122,132,142,152,162) der Schaufel (11,12,13,14,15,16) befindet.

7. Turbine mit vertikaler Achse nach Anspruch 6, wobei das Steuerungsmittel (18) einen Antriebsmechanismus zum Antreiben des Kupplungsmittels (101,102,103,104,105,106) umfasst, wobei der Antriebsmechanismus umfasst:

Ein primäres Zahnrad (31), das sich an der Drehachse des Körpers befindet; und
ein sekundäres Zahnrad (301,302,303,304,305,306) in drehbarem Eingriff mit dem ersten Zahnrad (31) und eingerichtet, sich um eine Achse des sekundären Zahnrads zu drehen, die von der Drehachse des Körpers beabstandet ist.

8. Turbine mit vertikaler Achse nach Anspruch 7, die ferner wenigstens ein Paar von gegenläufigen Zahnrädern (720) oder Rädern umfasst, die zwischen den primären und sekundären Zahnrädern angeordnet sind, um Drehbewegung dazwischen zu übertragen.

9. Turbine mit vertikaler Achse nach Anspruch 7 oder Anspruch 8, wobei das sekundäre Zahnrad (301,302,303,304,305,306) eingerichtet ist, das erste Zahnrad während Drehung der Turbine relativ zum ersten Zahnrad (31) zu umkreisen.

10. Turbine mit vertikaler Achse nach einem der Ansprüche 7 bis 9, wobei der Antriebsmechanismus eine Vielzahl von sekundären Zahnrädern (301,302,303,304,305,306) umfasst, wobei jedes sekundäre Zahnrad (301,302,303,304,305,306) mit Kupplungsmitteln verbunden ist, die mit einer der Anordnung von Schaufeln (11,12,13,14,15,16) assoziiert sind.

11. Turbine mit vertikaler Achse nach einem der Ansprüche 7 bis 10, wenn von Anspruch 5 abhängig, wobei die Führungsschaufel (17) mit dem primären Zahnrad (31) verbunden und eingerichtet ist, das primäre Zahnrad (31) relativ zur Richtung der Flüssigkeitsströmung auszurichten.

12. Turbine mit vertikaler Achse nach einem der Ansprüche 7 bis 11, wobei der Antriebsmechanismus zwei Anordnungen von einem oder mehreren sekundären Zahnrädern (501,503,505;502,504,506) umfasst, wobei die erste Anordnung in einer ersten Ebene angeordnet ist und die zweite Anordnung in einer zweiten Ebene angeordnet ist, um Interferenz mit der ersten Anordnung zu vermeiden.

13. Erneuerbare Stromerzeugungsanlage, umfassend:

Eine Anordnung von Windturbinen, die in einem Gebiet von Gezeitenströmung angeordnet sind; und
eine Anordnung von Turbinen mit vertikaler Achse nach einem der vorhergehenden Ansprüche;
wobei die Turbinen zwischen Fundamenten der Windturbinen angeordnet sind, um Energie aus der Wasserströmung zwischen den Fundamenten zu extrahieren.

14. Turbinenanordnung, umfassend:

Einen Turbinenstützrahmen;
wenigstens ein Stützelement zum Tragen des Rahmens auf einem Gewässer;
wenigstens eine Turbine nach einem der Ansprüche 1 bis 12; und
reversierbare Strömungsführungen (74, 75) zum Konzentrieren einer Strömung, die auf eine erste Seite der Anordnung auf die Turbine auftrifft, wenn Flüssigkeit in einer ersten Richtung durch die Anordnung fließt und eingerichtet Flüssigkeit unbehindert durch die Strömungsführungen zu fließen zu lassen, wenn Flüssigkeit in einer zweiten Richtung durch die Turbinenanordnung fließt, die im Wesentlichen entgegengesetzt zur ersten Richtung ist.

15. Turbinenanordnung, umfassend:

Einen Turbinenstützrahmen;
wenigstens ein Stützelement zum Tragen des Rahmens auf einem Gewässer;
ein Paar von Turbinen nach einem der Ansprüche 1 bis 12, die eingerichtet sind, sich in entgegengesetzten Richtungen zueinander zu drehen, wenn Flüssigkeit durch die Anordnung fließt.

**Revendications**

1. Turbine à axe vertical, comportant :

   un corps (10) qui est configuré pour tourner autour d'un axe de rotation ;
   un réseau d'aubes (11, 12, 13, 14, 15, 16) reliées au corps (10) et agencées autour de l'axe de rotation ;
   les aubes (11, 12, 13, 14, 15, 16) ayant chacune des premier (111, 121, 131, 141, 151, 161) et deuxième (112, 122, 132, 142, 152, 162) points de connexion et étant connectées au corps (10) au niveau du premier point de connexion (111, 121, 131, 141, 151, 161), situé sur un premier côté d'un centre de pression de l'aube (11, 12, 13, 14, 15, 16) et étant en mesure de tourner, autour du premier point de connexion (111, 121, 131, 141, 151, 161), autour d'un axe sensiblement parallèle par rapport à l'axe de rotation du corps (10) ;
   les aubes (11, 12, 13, 14, 15, 16) étant en mesure de se mettre en prise de manière libérable avec le corps (10) au niveau du deuxième point de connexion (112, 122, 132, 142, 152, 162), situé sur un deuxième côté du centre de pression de l'aube (11,12,13,14,15,16);et
   un moyen de mise en prise libérable (101, 102, 103, 104, 105, 106) à des fins de mise en prise sélective du deuxième point de connexion (112, 122, 132, 142, 152, 162) avec le corps (10) ; dans laquelle
   le moyen de mise en prise libérable (101, 102, 103, 104, 105, 106) est configuré pour empêcher toute rotation de l'aube (11, 12, 13, 14, 15, 16) par rapport au corps (10) dans l'une ou l'autre direction quand il est mis en prise.

2. Turbine à axe vertical selon la revendication 1, dans laquelle la turbine comporte par ailleurs un moyen de commande (18) configuré pour commander le moyen de mise en prise libérable (101, 102, 103, 104, 105, 106) à des fins de mise en prise sélective du deuxième point de connexion (112, 122, 132, 142, 152, 162) en fonction de la position du corps (10).

3. Turbine à axe vertical selon l'une quelconque des revendications 1 à 2, dans laquelle la mise en prise sélective du deuxième point de connexion (112, 122, 132, 142, 152, 162) est effectuée de manière synchrone avec la rotation du corps (10) de la turbine.

4. Turbine à axe vertical selon l'une quelconque des revendications 2 ou 3, comportant par ailleurs une aube directrice (17) connectée au moyen de commande (18) de telle sorte que le moyen de commande (18) peut être ajusté en fonction d'une direction d'un écoulement du fluide ayant un impact sur l'aube directrice.

5. Turbine à axe vertical selon l'une quelconque des revendications 1 à 4, dans laquelle le moyen de mise en prise libérable (101, 102, 103, 104, 105, 106) est agencé à des fins de mise en prise du deuxième point de connexion (112, 122, 132, 142, 152, 162) au cours d'un premier étage d'une révolution de la turbine et à des fins de libération du deuxième point de connexion (112, 122, 132, 142, 152, 162) de telle sorte que l'aube peut tourner librement autour du premier point de connexion (111, 121, 131, 141, 151, 161) au cours d'un deuxième étage d'une révolution de la turbine.

6. Turbine à axe vertical selon l'une quelconque des revendications 1 à 5, dans laquelle le moyen de mise en prise libérable (101, 102, 103, 104, 105, 106) comporte un portillon rotatif ayant une partie de réception qui est rotative autour d'un axe du moyen de mise en prise (101, 102, 103, 104, 105, 106) à des fins de retenue libérable d'une partie de mise en prise correspondante située au niveau du deuxième point de connexion (112, 122, 132, 142, 152, 162) de l'aube (11, 12, 13, 14, 15, 16).

7. Turbine à axe vertical selon la revendication 6, dans laquelle le moyen de commande (18) comporte un mécanisme d'entraînement servant à entraîner le moyen de mise en prise (101, 102, 103, 104, 105, 106), le mécanisme d'entraînement comportant :

   un engrenage primaire (31) situé au niveau de l'axe de rotation du corps ; et
   un engrenage secondaire (301, 302, 303, 304, 305, 306) en prise de rotation avec le premier engrenage (31) et agencé à des fins de rotation autour d'un axe d'engrenage secondaire espacé par rapport à l'axe de rotation du corps.

8. Turbine à axe vertical selon la revendication 7, comportant par ailleurs au moins une paire d'engrenages contrarotatifs (720), ou de roues, disposés entre les engrenages primaire et secondaire à des fins de transfert du mouvement de rotation entre eux.

9. Turbine à axe vertical selon la revendication 7 ou la revendication 8, dans laquelle l'engrenage secondaire (301, 302, 303, 304, 305, 306) est agencé afin de décrire des orbites autour du premier engrenage lors de la rotation de la turbine par rapport au premier engrenage (31).

10. Turbine à axe vertical selon l'une quelconque des revendications 7 à 9, dans laquelle le mécanisme d'entraînement comporte une pluralité d'engrenages secondaires (301, 302, 303, 304, 305, 306), chaque engrenage secondaire (301, 302, 303, 304, 305, 306) étant connecté au moyen de mise en prise associé à l'une du réseau d'aubes (11, 12, 13, 14, 15, 16).

11. Turbine à axe vertical selon l'une quelconque des revendications 7 à 10, quand dépendantes de la revendication 5, dans laquelle l'aube directrice (17) est connectée à l'engrenage primaire (31) et est agencée pour aligner l'engrenage primaire (31) par rapport à la direction de l'écoulement du fluide.

12. Turbine à axe vertical selon l'une quelconque des revendications 7 à 11, dans laquelle le mécanisme d'entraînement comporte deux réseaux constitués d'un ou de plusieurs engrenages secondaires (501, 503, 505 ; 502, 504, 506), le premier réseau étant agencé dans un premier plan et le deuxième réseau étant agencé dans un deuxième plan pour éviter toute interférence avec le premier réseau.

13. Installation de génération d'énergie renouvelable comportant:

un réseau de turbines éoliennes agencées dans une région d'écoulement de marée ; et
un réseau de turbines à axe vertical selon l'une quelconque des revendications précédentes ;
dans laquelle les turbines sont agencées entre des fondations des turbines éoliennes à des fins d'extraction d'énergie en provenance de l'écoulement de l'eau entre les fondations.

14. Ensemble de turbine comportant :

un cadre de support de turbine ;
au moins un élément de support servant à supporter le cadre sur une masse d'eau ;
au moins une turbine selon l'une quelconque des revendications 1 à 12 ; et
des dispositifs de guidage d'écoulement du type réversible (74, 75) servant à concentrer un écoulement ayant un impact sur un premier côté de l'ensemble jusque sur la turbine quand le fluide s'écoule au travers de l'ensemble dans une première direction et agencés pour laisser passer le fluide librement au travers des dispositifs de guidage d'écoulement quand le fluide s'écoule au travers de l'ensemble de turbine dans une deuxième direction sensiblement opposée à la première direction.

15. Ensemble de turbine comportant:

un cadre de support de turbine ;
au moins un élément de support servant à supporter le cadre sur une masse d'eau ;
une paire de turbines selon l'une quelconque des revendications 1 à 12, agencées pour tourner dans des directions opposées l'une par rapport à l'autre quand le fluide s'écoule au travers de l'ensemble.

FIG. 1

*FIG. 2*

FIG. 3

FIG. 4

FIG. 5

FIG. 6

EP 2 751 421 B1

FIG. 7

FIG. 7A

*FIG. 7B*

EP 2 751 421 B1

743

753

754

Axle

Axle

751

752

750

*FIG. 7C*

FIG. 7D

FIG. 8

FIG. 9

**EP 2 751 421 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AU 2011100453 A4
- US 2006151664 A1